# EUROPÄISCHE PATENTANMELDUNG

(11) **EP 1 742 285 A1**
(43) Veröffentlichungstag der Anmeldung: **10.01.2007**
(21) Anmeldenummer: 05106057.2
(22) Anmeldetag: 04.07.2005
(51) Int. Cl.: H01M 8/02

(54) **Flussfeldplatte, Brennstoffzelle und Brennstoffzellenstapel**

(71) Anmelder: CEKA Elektrowerkzeuge AG + Co. KG, 9630 Wattwil (CH)
(72) Erfinder: Ruge, Martin, Dr., 2540 Grenchen (CH); Durrer, Philipp, 9247 Henau (CH)
(74) Vertreter: Hepp, Dieter

(57) **Zusammenfassung**

Eine Flussfeldplatte (20) für eine Brennstoffzelle (10) besteht aus mehreren Platten. Eine Flussfeldplatte (20) für Wasserstoff oder für Luft/Sauerstoff ist aus wenigstens zwei Teilplatten (21, 22) aufgebaut. Die Teilplatten (21, 22) sind im Wesentlichen identisch ausgebildet und nicht deckungsgleich aneinander angeordnet. Vorsprünge (28, 31, 44, 45, 62, 63) dienen zum Verifizieren der Anordnung/Reihenfolge von verschiedenen Platten (20, 21, 22, 30, 40, 41, 50, 61, 62), welche eine Brennstoffzelle (10) zusammensetzen.

## Beschreibung

Die Erfindung betrifft eine Flussfeldplatte, eine Brennstoffzelle und einen Brennstoffzellenstapel sowie ein Verfahren zum Herstellen, Kontrollieren des Betriebs und Reparieren von Brennstoffzellen bzw. Brennstoffzellenstapeln mit den Merkmalen des Oberbegriffs der unabhängigen Patentansprüche.

Aus Platten aufgebaute Brennstoffzellen bzw. Stapel aus solchen Brennstoffzellen sind heute zur direkten Erzeugung von elektrischer Energie aus Brennstoffen wie beispielsweise Wasserstoff bekannt.

Aus WO 2005/006472 ist beispielsweise ein Brennstoffzellenstapel bekannt, der eine in Richtung seiner Dicke komprimierbare Zwischenschicht aus flexiblem Graphit zwischen benachbarten Stapeln aufweist. Aus WO 2003/063263 ist ebenfalls eine Zwischenschicht zwischen Endplatten von Brennstoffzellen bekannt.

WO 2005/004265 zeigt eine Brennstoffzelle, welche mit einem Feuchtigkeitstauschelement versehen ist.

Bestehende, bekannte Brennstoffzellen bzw. Brennstoffzellenstapel haben im Hinblick auf ihre Leistung bereits viel versprechende Resultate gebracht. Es besteht aber ein Problem im Hinblick auf eine industrielle, kostengünstige Fertigung von solchen Zellen.

Es ist daher eine Aufgabe der vorliegenden Erfindung, die Nachteile des Bekannten zu vermeiden, insbesondere also Brennstoffzellen oder Brennstoffzellenstapel zu schaffen, welche auf einfache Art und Weise industriell gefertigt werden können. Eine weitere Aufgabe der Erfindung besteht darin, bei solchen Brennstoffzellen die Herstellung eines Stapels zu vereinfachen. Eine weitere Aufgabe der Erfindung besteht auch darin, ein Verfahren zum Aufbauen eines Brennstoffzellenstapels zu schaffen, welches auf einfache Weise und mit geringer Fehlerquote durchführbar ist. Gemäss der Erfindung soll ausserdem auch ein Verfahren zum Kontrollieren des Betriebs eines Brennstoffzellenstapels sowie ein Verfahren zum Reparieren von Brennstoffzellenstapeln geschaffen werden.

Erfindungsgemäss werden diese und weitere Aufgaben mit einer Flussfeldplatte, einer Brennstoffzelle und einem Brennstoffzellenstapel sowie mit dem Verfahren gemäss den Merkmalen des kennzeichnenden Teils der unabhängigen Patentansprüche gelöst.

Ein erster Aspekt der Erfindung betrifft eine Flussfeldplatte für eine Brennstoffzelle. Im Stand der Technik bekannte Brennstoffzellen weisen beidseitig einer so genannten Membran Elektroden Einheit Flussfeldplatten auf, welche einen Pfad für den Brennstoff, typischerweise Wasserstoff auf der einen Seite der Membran und einen Pfad für Luft oder Sauerstoff auf der andern Seite der Membran bilden. Die Ausbildung von solchen Flussfeldplatten ist im Hinblick auf eine möglichst effiziente Verteilung von Brennstoff und Sauerstoff entlang der Membran wichtig. Gleichzeitig sollten die Produktionskosten für solche Platten möglichst gering gehalten werden, da eine grosse Anzahl von solchen Flussfeldplatten in einem Brennstoffzellenstapel eingesetzt werden muss.

Erfindungsgemäss besteht die Flussfeldplatte gemäss einem ersten Aspekt der Erfindung aus wenigstens zwei Teilplatten. Die beiden Teilplatten weisen Öffnungen auf, die sich jeweils von der einen zur andern Oberfläche einer Teilplatte erstrecken. Durch den Aufbau der Flussfeldplatten aus Teilplatten besteht die Möglichkeit, Kanäle für die Fluide in vielen Varianten im Hinblick auf Grösse und Form auf einfache Art und Weise herzustellen. Insbesondere ermöglicht der Aufbau aus Teilplatten auch die Herstellung von Stufen und Verwirbelungszonen ohne grösseren technischen Aufwand.

Bevorzugt weisen die Teilplatten im Bereich der Öffnungen eine identische Form und Grösse auf. Die Teilplatten können daher aus einem Rohling in identischer Art und Weise hergestellt werden. Die Teilplatten werden dabei nicht deckungsgleich aneinander angelegt. Es ist denkbar, durch Anbringen von Markierungen an einem Rohling die Teilplatten zu kennzeichnen, ohne dass dabei aber eine Änderung an den Öffnungen erfolgt. Auf diese Weise kann beispielsweise die Lage angegeben werden, in welcher Teilplatten gegenseitig angeordnet werden sollen. Weil die Teilplatten identisch aufgebaut sind, lassen sie sich besonders einfach in einem industriellen Verfahren, beispielsweise durch Stanzen mit einem einzigen Werkzeug herstellen. Durch das nicht deckungsgleiche Anordnen lässt sich trotzdem eine grosse Vielzahl von Kanälen bilden.

Typischerweise können die Teilplatten gegeneinander um 180° gedreht sein. Die Drehung erfolgt beispielsweise um eine senkrecht zur Fläche der Teilplatte stehende Drehachse. Es ist aber auch denkbar, die Teilplatten um eine durch die Platte selbst verlaufende Drehachse um 180° zu drehen.

Die Flussfeldplatten für Brennstoff und Luft können auch unterschiedlich dick sein. Der Vorteil liegt in optimaleren Strömungen, da die benötigte Luft ein 2-3 mal grösseres Volumen aufweist als der benötigte Wasserstoff. Durch gezielte Auswahl von Grössen kann ausserdem der elektrische Widerstand und/oder die Wärmeleitfähigkeit der einzelnen Zelle gezielt beeinflusst werden.

Alternativ ist es auch denkbar, die Teilplatten gegeneinander in einer Richtung parallel zur Oberfläche der Teilplatten zu verschieben, um spezifische Formen von Kanälen für das Fluid zu bilden.

Die Teilplatten bestehen typischerweise aus einem leitenden Material, beispielsweise Graphit. Insbesondere ein Stanzverfahren ist im Zusammenhang mit Graphitplatten besonders vorteilhaft. Es ist aber auch denkbar, die Öffnungen in den Teilplatten durch Wasserstrahl- oder Laserstrahlbearbeitung einzubringen.

Die Öffnungen sind typischerweise als längliche Schlitze ausgebildet. Das Längen- zu Breitenverhältnis beträgt dabei vorzugsweise wenigstens 2:1 oder mehr. Die Öffnungen sind dabei vorzugsweise parallel zu den Seiten einer rechteckig ausgebildeten Teilplatte angeordnet. Es hat sich gezeigt, dass derart dimensionierte und angeordnete Öffnungen zu besonders vorteilhaften Flusseigenschaften der Fluide führt. Es ist denkbar, alle Öffnungen als längliche Schlitze auszubilden oder auch nur einen Teil der Öffnungen als Schlitze auszubilden.

Alternativ ist es ausserdem bevorzugt, wenigstens einen Teil der Öffnungen als abgewinkelte, gebogene oder verjüngende Schlitze auszubilden. Durch die Kombination von länglichen, abgewinkelten, gebogenen und sich verjüngenden Schlitzen lassen sich die flüssigkeitsdynamischen Eigenschaften der Flussfeldplatte besonders gezielt beeinflussen.

Gemäss einem weiteren Ausführungsbeispiel können die Öffnungen durch Stege unterbrochen sein. Durch Stege werden Stufen für das Fluid im Flusskanal gebildet. Aufgrund dieser Stufen ergibt sich eine Verwirbelung und dadurch eine bessere, homogenere Verteilung der Fluide in dem Kanal innerhalb der Flussfeldplatten.

Ein weiterer Aspekt der Erfindung betrifft eine einteilige Flussfeldplatte. Diese einteilige Platte ist mit Öffnungen versehen, welche sich von der einen Oberfläche zur andern Oberfläche der einteiligen Platte erstrecken. Die Öffnungen sind durch Stege unterbrochen. Rillen in der Platte sind im Bereich der Stege angeordnet, so dass ein Übertritt des Fluids von einem Schlitz über den Steg in einen anderen Schlitz möglich ist.

Auf diese Weise kann eine Brennstoffzelle mit besonders wenigen Teilen aufgebaut werden. Die Zelle wird dadurch dünner. Dies kann insbesondere für kleine Brennstoffzellen, beispielsweise in mobilen Anwendungen wie für Laptops sinnvoll sein. Bei mit reinem Sauerstoff betriebenen Brennstoffzellen sind die Gasvolumina relativ gering. In diesem Fall kann ebenfalls eine einteilige Platte eingesetzt werden.

Besonders bevorzugt werden solche Rillen gleichzeitig bei der Herstellung einer Platte, d. h. gleichzeitig beim Einbringen der Öffnungen in die Platte eingebracht. Sie können typischerweise bei einem Stanzen der Öffnungen in die Platte eingeprägt sein. Es ist aber auch denkbar, die Rillen nachträglich durch Schleifen, Fräsen oder Laserstrahlschneiden einzuarbeiten.

Gemäss einem weiteren Aspekt der Erfindung wird eine Platte vorgeschlagen, welche mit wenigstens einem vom Rand der Platte abstehenden Vorsprung oder mit einem eingerückten Absatz versehen ist. Dies kann auch eine Flussfeldplatte mit Teilplatten sein, welche wenigstens einen vom Rand der Platte seitlich abstehenden Vorsprung aufweisen oder mit einem eingerückten Absatz versehen sind. Ein solcher Vorsprung hat insbesondere im Hinblick auf die Herstellung einer Brennstoffzelle sowie eines Brennstoffzellenstapels besonders vorteilhafte Wirkungen. Einerseits ermöglicht ein solcher Vorsprung (oder auch ein eingerückter Absatz) das Ausrichten der einzelnen Teilplatten gegeneinander. Die Lage und/oder Orientierung der Teilplatte kann mit einem solchen Vorsprung gewissermassen codiert werden. Insbesondere wenn identische Teilplatten verwendet werden, die gegeneinander nicht deckungsgleich angeordnet sind, kann anhand eines solchen Vorsprungs festgestellt werden, dass die Teilplatten sich in der richtigen Lage befinden. Auf diese Weise lässt sich ebenfalls beispielsweise eine gewünschte Reihenfolge von nicht identischen oder identischen Teilplatten verifizieren. Im Zusammenhang mit der vorstehend beschriebenen Erfindung mit aus Teilplatten aufgebauten Flussfeldplatten sind solche Vorsprünge oder Absätze daher besonders vorteilhaft. Sie erlauben es, sicherzustellen, dass die Teilplatten, welche die Flussfeldplatte bilden, in der korrekten Art und Weise übereinander liegen.

Vorsprünge sind aber auch im Zusammenhang mit anderen Platten im Hinblick auf deren Anordnung vorteilhaft.

Ein weiterer Vorteil der Erfindung ergibt sich insbesondere im Zusammenhang mit elektrisch leitenden Platten. So erlaubt ein Vorsprung an einer elektrisch leitenden Platte eine Bestimmung des Potentials dieser Platte durch Anlegen eines Spannungsmessgerätes. Das Potential der einzelnen Platten oder ausgewählter Platten in einem Brennstoffzellenstapel kann so während dem Betrieb abgegriffen und zu Steuerungs- oder Regelungszwecken oder zu Kontrollzwecken verwendet werden. Ausserdem ist es möglich, im Fall von defekten Brennstoffzellen innerhalb eines Stapels eine solche defekte Zelle durch Kurzschliessen der Vorsprünge von benachbarten Brennstoffzellen gewissermassen auszuschalten.

Ein weiterer Aspekt der Erfindung betrifft eine Brennstoffzelle, welche mit wenigstens einer Flussfeldplatte versehen ist, die in der vorstehend beschriebenen Art und Weise aufgebaut ist. Dabei ist es denkbar, eine Brennstoffzelle mit einer mehrteiligen Flussfeldplatte und vorzugsweise mit einem Vorsprung oder Absatz aufzubauen. Es ist aber auch denkbar, bei einteiligen Flussfeldplatten oder bei anderen Platten der Brennstoffzellen Vorsprünge vorzusehen, welche aus einem durch Platten gebildeten Stapel hervorstehen. Selbstverständlich lässt sich eine ähnliche Konstruktion auch mit eingerückten Absätzen anstelle von Vorsprüngen realisieren.

Bei einer Brennstoffzelle sind die Vorsprünge an einer oder mehreren Platten bevorzugt derart angeordnet, dass sich die gegenseitige Ausrichtung der Platten und/oder die Reihenfolge der Platten aufgrund eines oder mehrerer Vorsprünge von ausserhalb des Stapels feststellen oder überprüfen lässt.

Besonders bevorzugt weisen bei einer solchen aus Platten aufgebauten Brennstoffzelle alle Platten wenigstens einen Vorsprung oder einen eingerückten Absatz auf. Dies sind typischerweise Platten wie Flussfeldplatten (welche ein- oder mehrteilig aufgebaut sein können), Distanzrahmen, Gasdiffusionslayer, eine Membran mit Katalysatorschicht oder Kühl- und Separatorplatten. Die Vorsprünge sind typischerweise so dimensioniert und angeordnet, dass sie eine Überprüfung der Reihenfolge auf einfache Weise erlauben. Insbesondere können die Vorsprünge so angeordnet sein, dass sie eine Stufe bilden.

Es ist auch denkbar, eine Platte nicht mit einem Vorsprung und/oder Absatz zu versehen. Solange eine einzige Platte keinen Vorsprung aufweist, ist trotzdem eine eindeutige Identifikation der Platte innerhalb des Stapels denkbar.

Im Hinblick auf Überbrückung von defekten Brennstoffzellen und/oder Kontrolle des Betriebs einer Brennstoffzelle durch Abgreifen des Potentials einer Platte sind besonders bevorzugt elektrisch leitenden Platten mit einem Vorsprung versehen.

Ein weiterer Aspekt der Erfindung betrifft einen Brennstoffzellenstapel mit wenigstens zwei Brennstoffzellen in der vorstehend beschriebenen Art und Weise.

Die einzelnen Brennstoffzellen im Stapel sind identisch aufgebaut. Insbesondere sind auch die Vorsprünge der einzelnen Platten in verschiedenen Brennstoffzellen identisch angeordnet. Die Vorsprünge erlauben daher eine Verifikation des Aufbaus der einzelnen Brennstoffzellen an sich. Identisch angeordnete Vorsprünge bei den einzelnen Brennstoffzellen zeigen auch den korrekten Aufbau des Stapels an.

Ein weiterer Aspekt der Erfindung betrifft ein Verfahren zum Herstellen einer vorstehend beschriebenen Brennstoffzelle. Die Brennstoffzelle wird durch Aufeinanderstapeln von wenigstens zwei Platten aufgebaut. Erfindungsgemäss werden die Platten mittels seitlich vorstehenden Vorsprüngen und/oder Vertiefungen gegenseitig ausgerichtet und/oder die Reihenfolge der Platten wird bei derart aufeinander gestapelten Platten anhand der seitlich vorstehenden Vorsprüngen und/oder Vertiefungen überprüft.

Ein weiterer Aspekt der Erfindung betrifft ein Verfahren zum Kontrollieren des Betriebs eines Brennstoffzellenstapels. Erfindungsgemäss wird das elektrische Potential wenigstens einer elektrisch leitenden Platte typischerweise an einem seitlich vorstehenden Vorsprung abgegriffen und zum Kontrollieren des Betriebs des Stapels verwendet. So ist es beispielsweise denkbar, im Betrieb eines Brennstoffzellenstapels aufgrund des Potentialabfalls zwischen den einzelnen Platten festzustellen, ob eine Platte bzw. eine Brennstoffzelle defekt ist. Es ist aber auch denkbar, das Potential abzugreifen und Prozessparameter (Strom, Druck oder Temperatur) zu beeinflussen, um beispielsweise die Prozessführung zu optimieren (Spülen, Druckstösse oder Stöchiometrische Variation der Gasflüsse).

Im Lauf der Zeit kann es zu Beschädigungen einzelner Zellen kommen. Typischerweise können Defekte an der Membranelektrodeneinheit (MEA) auftreten. Wenn eine Brennstoffzelle innerhalb des Stapels defekt ist, kann dies unter anderem zu einem Stromverbrauch in der defekten Zelle und dadurch zu einer reduzierten Leistung des ganzen Stapels führen. Erfindungsgemäss wird ein Brennstoffzellenstapel dadurch repariert, dass eine defekte Brennstoffzelle im Stapel durch elektrisches Verbinden von zur defekten Brennstoffzelle benachbarten Brennstoffzellen überbrückt wird. Gleichzeitig kann der Gaszufluss in die defekte Zelle unterbunden werden, indem eine Plastikfolie die Gas-Zuleitungen zur Zelle verschliessen. Insbesondere kann das elektrische Kurzschliessen durch Verbinden von seitlich vorstehenden Vorsprüngen an Platten der benachbarten Brennstoffzellen erfolgen.

Die Erfindung wird im Folgenden in Ausführungsbeispielen und anhand der Zeichnungen näher erläutert. Es zeigen:
- Fig. 1: eine Explosionsdarstellung einer erfindungsgemässen Brennstoffzelle
- Fig. 2: eine Draufsicht auf eine Teilplatte einer erfindungsgemässen Flussfeldplatte
- Fig. 3: Draufsicht auf eine Luftseite einer erfindungsgemässen Brennstoffzelle
- Fig. 4: eine perspektivische Darstellung von zwei eine Flussfeldplatte bildenden Teilplatten
- Fig. 5: eine perspektivische Darstellung von zwei Kühlplatten und einer Separatorplatte
- Fig. 6: Draufsicht auf eine zusammengebaute Brennstoffzelle mit Kühlplatten
- Fig. 7: Ansicht einer Brennstoffzelle mit einer Kühlplatte
- Fig. 8a: eine Draufsicht auf eine einteilige Flussfeldplatte
- Fig. 8b: Perspektivische Darstellung der Flussfeldplatte aus Fig. 8a
- Fig. 8c: Seitenansicht der Flussfeldplatte aus Fig. 8a
- Fig. 8d: vergrösserter Ausschnitt aus Fig. 8b

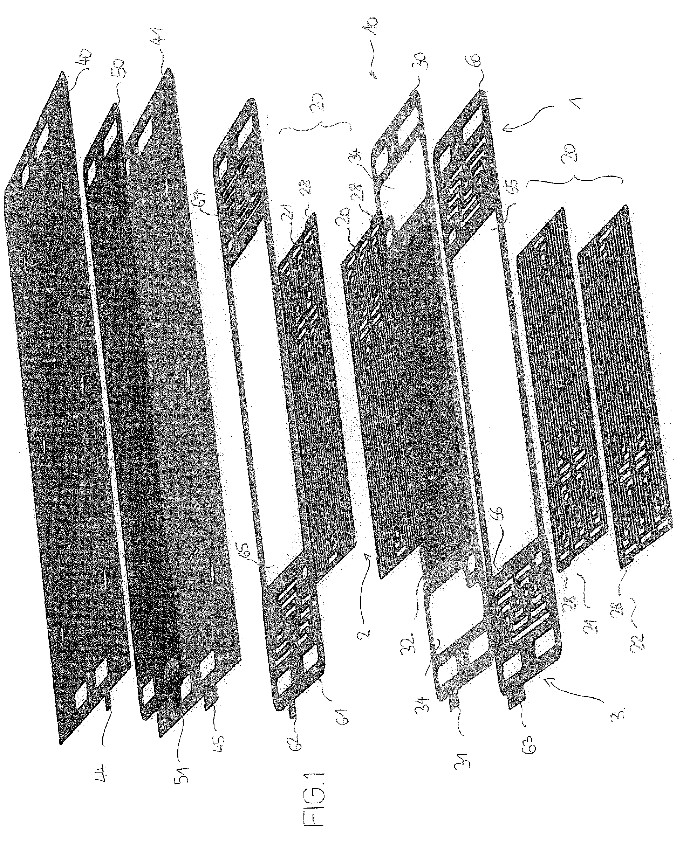

Fig. 1 zeigt eine Explosionsansicht einer erfindungsgemässen Brennstoffzelle 10. Die Brennstoffzelle 10 besteht aus drei Sektoren 1, 2, 3. Sektor 3 ist der Luftbefeuchtungsbereich. Der Sektor 2 ist die aktive Schicht, wo die elektromechanische Reaktion stattfindet. Sektor 1 ist der Wasserstoffbefeuchtungsbereich. Eine Membranelektrodeneinheit (MEA) 30 trennt die beiden Gase voneinander. Beidseitig der MEA 30 sind für jedes Prozessgas zwei gestanzte Teilplatten 21, 22 übereinander gelegt, welche eine Flussfeldplatte 20 für die Gase bilden. Durch dieses Flussfeld können die Prozessgase gleichmässig über der aktiven Fläche der mit Katalysator bestrichenen Membranfläche, wo die elektrochemische Reaktion erfolgt, verteilt werden. Die beiden Flussfeldplatten 20 werden durch einen Kunststoffrahmen 60, 61 geführt und positioniert.

In Fig. 1 oberhalb der sauerstoffseitigen Kunststoffrahmenplatte 61 ist eine sauerstoffseitige Kühlplatte 41 angeordnet. Oberhalb der Kühlplatte 41 trennt eine Trennplatte 50 die Brennstoffzelle 10 von einer wasserstoffseitigen Kühlplatte 40 einer nicht dargestellten darüber liegenden weiteren Brennstoffzelle. Die Brennstoffzelle 10 gemäss Fig. 1 ist ihrerseits auf ihrer in Fig. 1 unteren Seite ebenfalls durch eine wasserstoffseitige Kühlplatte 40 abgeschlossen (nicht dargestellt).

Die Trennplatte 50 verhindert den Durchtritt von Wasserstoff auf die Sauerstoffseite und umgekehrt. Die Kühlplatten 40, 41 dienen zur Abfuhr von Wärme.

Die verschiedenen Platten sind mit nach aussen vorstehenden Vorsprüngen versehen, welche durch einen treppenartigen Aufbau eine Überprüfung der korrekten Reihenfolge der einzelnen Platten erlauben. In Fig. 1 werden von unten nach oben die Vorsprünge immer kleiner, so dass eine Treppe entsteht. Die wasserstoffseitige Kühlplatte 40 ist mit einem Vorsprung 44 versehen. Die Trennplatte 50 ist mit einem Vorsprung 51 versehen. Die luft- oder sauerstoffseitige Kühlplatte 41 ist mit einem Vorsprung 45 versehen.

Die sauerstoffseitige Kunststoffrahmenplatte 61 ist mit einem Vorsprung 62 versehen. In eine Öffnung 65 der Kunststoffrahmenplatte 61 sind die Teilplatten 21, 22 einsetzbar, welche gemeinsam eine luftseitige Flussfeldplatte 20 bilden.

Die Membranelektrodeneinheit 30 ist mit einem Vorsprung 31 versehen.

Die Membranelektrodeneinheit 30 weist Öffnungen 34 auf, welche den Durchtritt von Gasen von der einen Seite der Einheit 30 auf die andere Seite erlauben.

Der äussere Rand der Membranelektrodeneinheit ist aus Gründen der Festigkeit und der Dichtheit mit einer Gummischicht 33 verstärkt. Im Zentrum der Einheit 30 ist eine Elektrode in an sich bekannter Art und Weise angeordnet.

Die Kunststoffrahmenplatte 60 auf der Wasserstoffseite ist mit einem Vorsprung 63 versehen. In die Öffnung 65 der Kunststoffrahmenplatte 60 sind Teilplatten 21, 22 eingesetzt, welche zusammen eine Flussfeldplatte 2 für Wasserstoff bilden.

Die Teilplatten 21, 22 sind auf identische Art und Weise aufgebaut, typischerweise in einem Stanzvorgang mit gleichem Stanzwerkzeug hergestellt. Die Teilplatten 21, 22 sind jeweils in Bezug aufeinander um 180° gegeneinander verdreht.

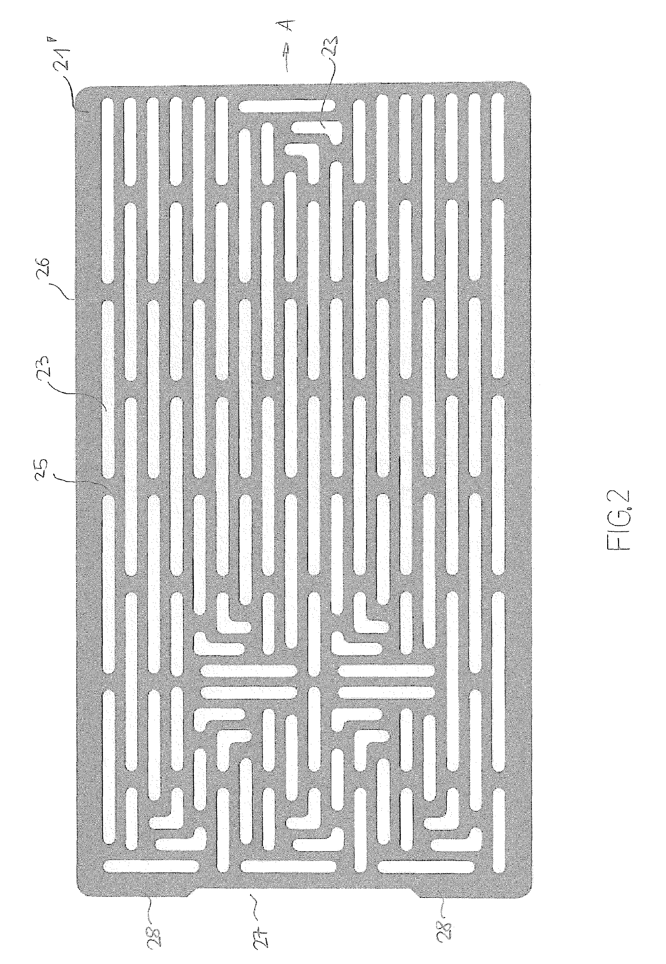

Um sicherzustellen, dass die Lage der Teilplatten 21, 22 in der Öffnung 65 korrekt ist, werden die Teilplatten 21, 22 (siehe auch Fig. 2) mit einer Vertiefung 27 und zwei vorstehenden Nasen 28 hergestellt. Ausgehend von diesem Teilplattenrohling 21' werden durch Entfernen der einen der Nasen 28 zwei spiegelsymmetrische Teilplatten 21, 22 hergestellt. Vertiefungen 66, 67 in den Kunststoffrahmenplatten 60, 61 stellen sicher, dass die Teilplatten 21, 22 nur in genau definierter Art und Weise in die Öffnungen 65 in den Kunststoffrahmenplatten 60, 61 eingesetzt werden können.

Als Membranelektrodeneinheit 30 wird eine herkömmliche Einheit der Firma Umicore AG des Typs pMembrain 300 (7-lagige MEA) in einer Grösse von 0.65 mm x 76 mm x 182 mm verwendet.

Die Flussfeldplatten 21, 22 bestehen aus gestanzten oder wasserstrahlgeschnitzten SIGRAFLEX-Platten (Typ L 02918Z IF) mit einer Dimension von 0.29 mm x 58 mm x 106 mm.

Die luftseitige und die wasserstoffseitige Kühlplatte 40, 41 bestehen aus SIGRAFLEX-Platten (Typ L 05518Z IF), welche gestanzt oder wasserstrahlgeschnitten ist. Die Dimension beträgt typischerweise 0.55 mm x 140 mm x 182 mm.

Die Trennplatte 50 besteht ebenfalls aus einer SIGRAFLEX-Platte (Typ L 05518Z), in welche Öffnungen wasserstrahlgeschnitten oder -gestanzt sind. Die Dimension beträgt 0.55 mm x 140 mm x 182 mm.

Die luftseitige und wasserstoffseitige Kunststoffrahmenplatte 60, 61 besteht aus einer 0.8 mm dicke Teflonfolie, welche wasserstrahlgeschnitten oder -gestanzt ist. Die Dimensionen betragen typischerweise 0.55 mm x 73 mm x 182 mm.

Fig. 2 zeigt einen Rohling 21' für eine Teilplatte 21 oder 22 für eine Flussfeldplatte. Der Rohling 21' weist auf der in Fig. 2 linken Seite eine Vertiefung 27 und zwei Nasen 28 auf. Durch Entfernen von wahlweise der unteren oder oberen Nase 28 kann eine Teilplatte 21 oder 22 herstellt werden. Die Teilplatten 21, 22 sind im Hinblick auf die Form von Öffnungen 23 identisch ausgebildet. Sie unterscheiden sich durch die Anordnung von Nasen 28, so dass anhand von übereinander liegenden Nasen sichergestellt werden kann, dass die Teilplatten korrekt spiegelsymmetrisch aneinander anliegen. Beim Zusammenbau erfolgt die Drehung um eine Achse A um 180°.

Die Öffnungen 23 sind im Wesentlichen länglich und parallel zur Längsseite 26 der Teilplatte 21 ausgebildet. Es sind aber auch abgewinkelte Öffnungen vorhanden. Nebeneinander liegende Öffnungen sind durch Stege 25 voneinander getrennt.

Die Teilplatte 21' wird aus einer vollen Platte durch Stanzen oder auch durch Wasserstrahlschneiden hergestellt.

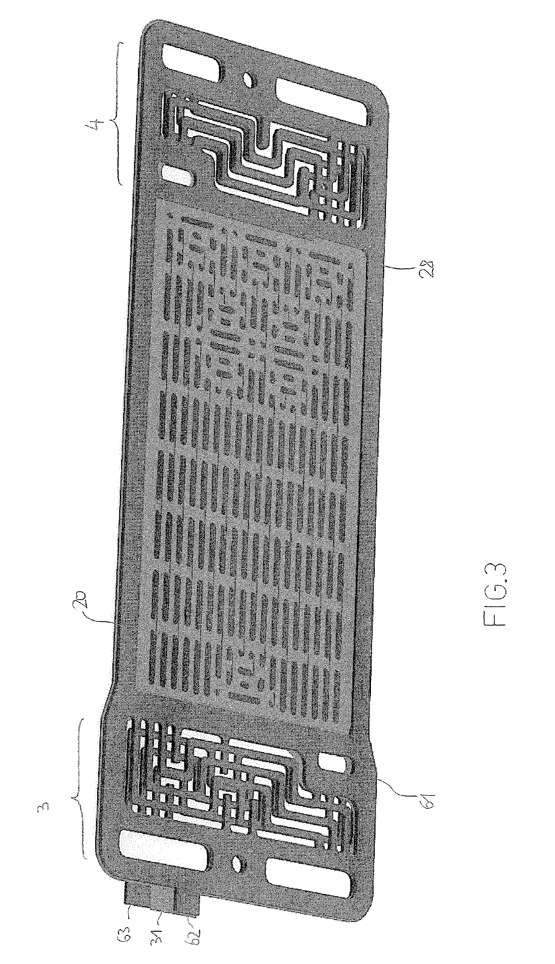

Fig. 3 zeigt eine Flussfeldplatte 20, die in der luftseitigen Kunststoffrahmenplatte 61 gehalten ist. Der Vorsprung 62 der luftseitigen Kunststoffrahmenplatte 61 liegt über dem Vorsprung 31 der im Übrigen nicht sichtbaren Membranelektrodeneinheit und über dem Vorsprung 63 der ansonsten auch nicht sichtbaren wasserstoffseitigen Kunststoffrahmenplatte. Die übereinander liegenden Vorsprünge 63, 31, 62 bilden treppenartige Stufen. Beim Zusammenbau der Zelle kann anhand des Vorliegens von solchen Treppen erkannt werden, dass die einzelnen Platten korrekt aufeinander gebaut sind.

In den linken und rechten Seiten von Fig. 3 sind Gaszufuhrbereiche 3, 4 gezeigt, welche der Befeuchtung und der Zufuhr von Wasserstoff und Luft dienen.

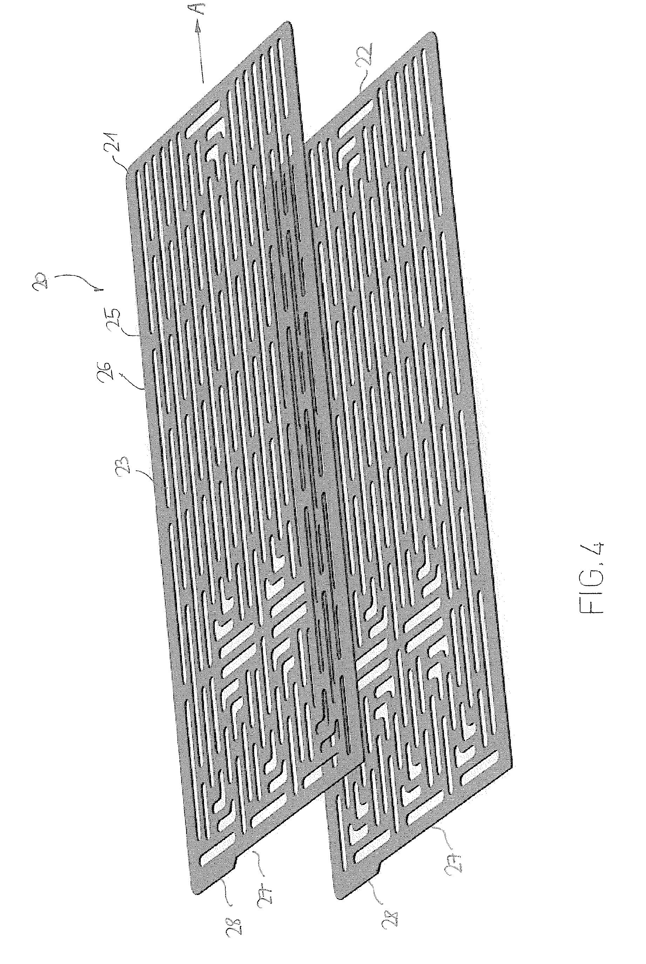

Fig. 4 zeigt die perspektivische Darstellung zweier Teilplatten 21, 22, welche gemeinsam eine Flussfeldplatte 20 bilden. Wenn die Teilplatten 21, 22 aneinander angelegt sind, bilden die Öffnungen 23 einen durchgehenden Kanal für ein Fluid, typischerweise Wasserstoff und Sauerstoff/Luft. Die obere Teilplatte 21 ist gegenüber der unteren Teilplatte 22 um die Achse A um 180° verdreht. Die übereinander liegenden Nasen 28 stellen sicher, dass die Teilplatten 21, 22 in der gewünschten Art und Weise übereinander liegen.

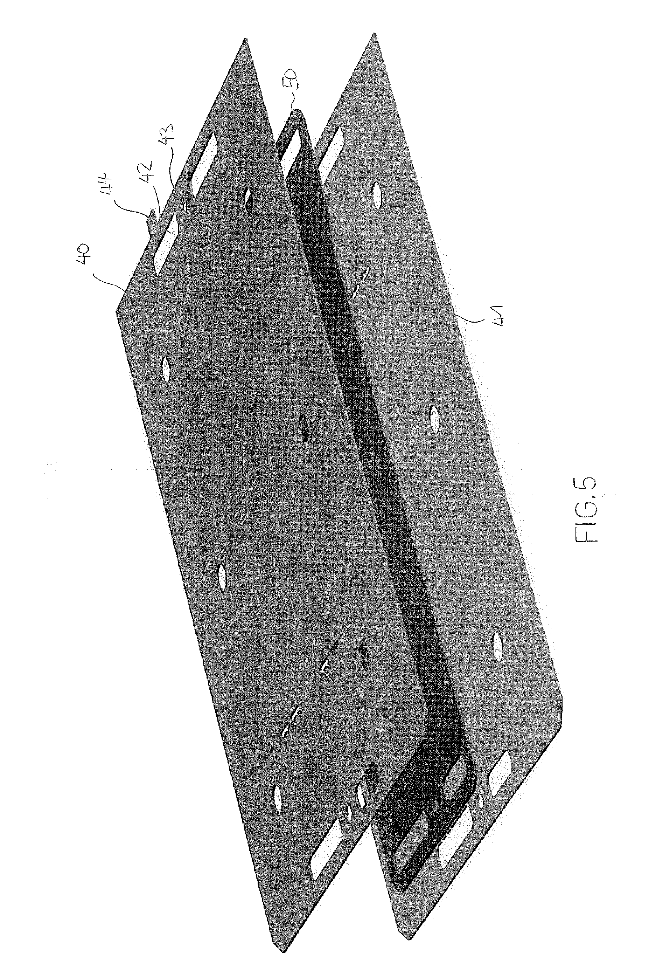

Fig. 5 zeigt in perspektivischer Darstellung eine detailliertere Ansicht der wasserstoffseitigen Kühlplatte 40, der luftseitigen Kühlplatte 41 und der dazwischen liegenden Trennplatte 50. Öffnungen 42 in den Kühlplatten dienen der Zufuhr der Fluide.

Ausserdem ist eine Öffnung 43 vorgesehen. Die Öffnung 43 ist in allen Platten vorgesehen (siehe auch Fig. 1), so dass durch Aufreihung der einzelnen Platten auf einem Stift eine korrekte Ausrichtung der einzelnen Platten gegeneinander erzielt werden kann.

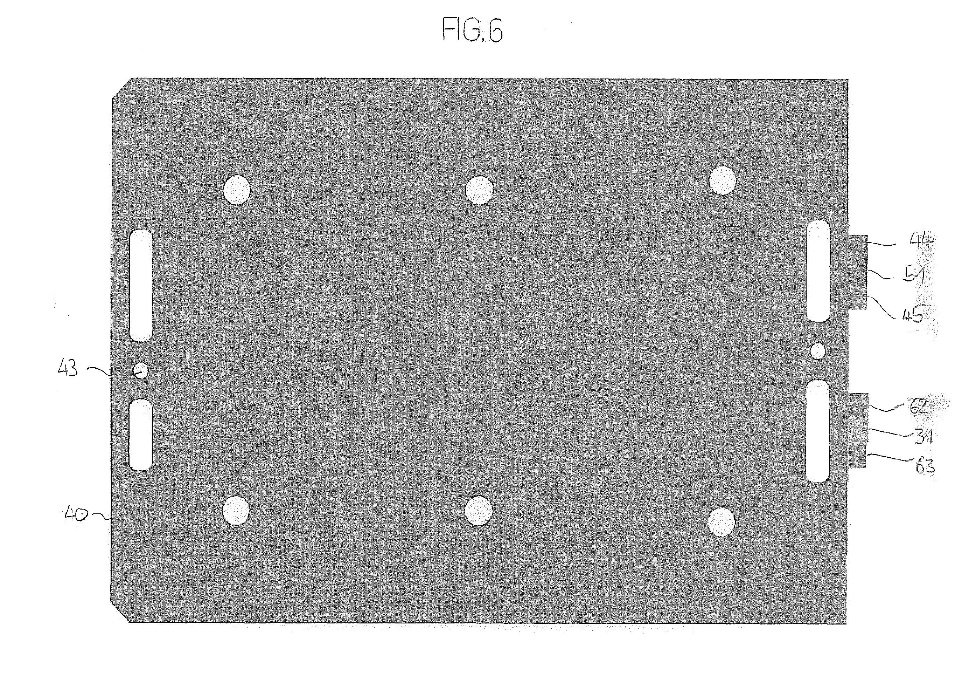

Fig. 6 zeigt eine Draufsicht auf eine komplett zusammengebaute Brennstoffzelle. Die treppenförmig übereinander liegenden Vorsprünge 44, 51, 45, 62, 31, 63 der einzelnen Platten stellen sicher, dass die Platten in der korrekten Art und Weise aufeinander gestapelt sind.

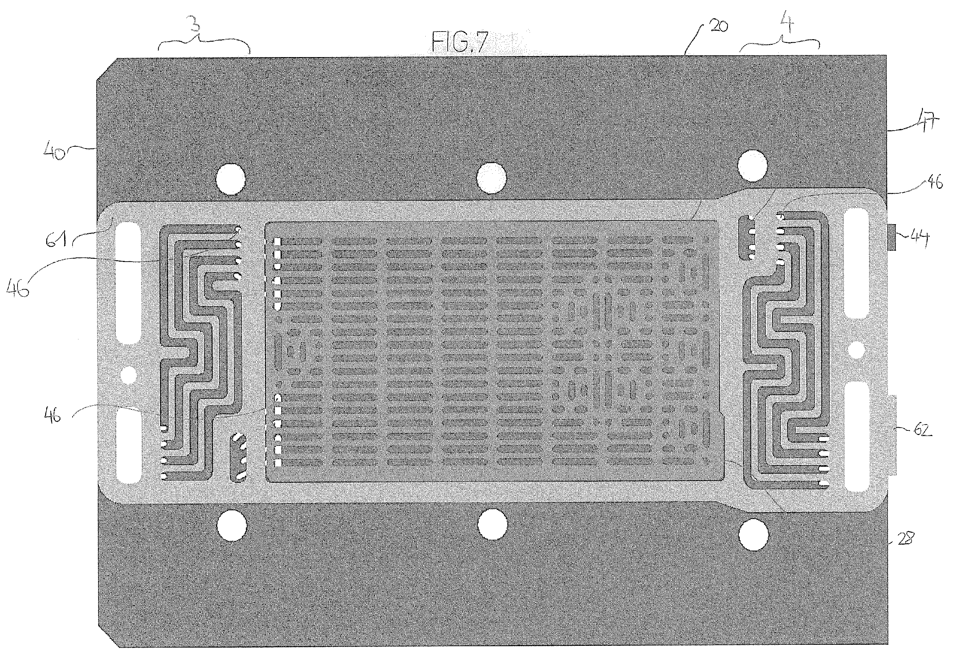

Fig. 7 zeigt eine Brennstoffzelle, welche auf einer Kühlplatte 40 angeordnet ist.

In der Ansicht in Fig. 7 sichtbare Durchbrüche 46 stellen sicher, dass Gase vom Gaszufuhrabschnitt 3 in die Flussfeldplatte 20 gelangen können. Öffnungen 47 stellen sicher, dass Gas von der einen Seite der nicht dargestellten Membranelektrodeneinheit 30 durch eine Öffnung 34 auf die andere Seite gelangen können.

Im Rahmen der Erfindung sind verschiedene Alternativen denkbar. So sind beispielsweise aus Teilplatten 21, 22 aufgebaute Flussfeldplatten 20 auch bei Anordnungen ohne Ausrichtvorsprünge sinnvoll einsetzbar. Mit Vorsprüngen versehene Platten können auch mit einstückigen Flussfeldplatten verwendet werden.

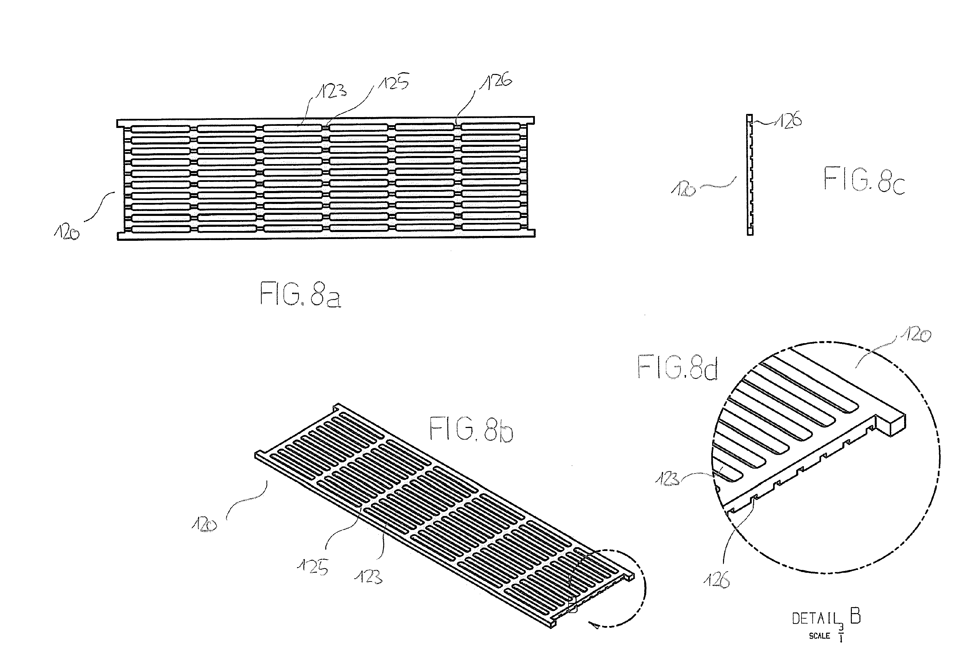

Ausserdem ist es auch denkbar, im Rahmen der Erfindung einteilige Flussfeldplatten 120 zu verwenden. Die Flussfeldplatten 120 sind mit Öffnungen 123 versehen. Die Öffnungen 123 sind durch Stege 125 voneinander getrennt. Rillen 126 dienen dem Durchtritt von Fluiden von einer Öffnung 123 zu einer benachbarten Öffnung über die Stege 125. Eine solche einteilige Flussfeldplatte 120 ist in den Figuren 8a bis 8d gezeigt. Die Herstellung einer solchen Flussfeldplatte 120 erfolgt typischerweise durch Stanzen und Prägen. Die Öffnungen 123 werden eingestanzt, die Rillen 126 eingeprägt.

## Patentansprüche

1. Flussfeldplatte (20)für eine Brennstoffzelle (10), welche Flussfeldplatte (20) aus wenigstens zwei Teilplatten (21, 22) mit sich von einer Oberfläche zur andern Oberfläche der Teilplatte erstreckenden Öffnungen (23) ausgebaut ist, wobei die Teilplatten (21, 22) aneinander anliegen derart, dass die Öffnungen (23) der übereinander liegenden Teilplatten (21, 22) gemeinsam wenigstens einen Flusskanal für ein Fluid bilden, wobei insbesondere die Teilplatten (21, 22) identische Öffnungen (23) aufweisen und nicht deckungsgleich aneinander anliegen.

2. Flussfeldplatte (20) nach Anspruch 1, **dadurch gekennzeichnet, dass** die Teilplatten (21, 22) gegeneinander um 180° gedreht sind, insbesondere um eine senkrecht zur Fläche der Teilplatten oder um eine durch die Teilplatten (21, 22) verlaufende Drehachse (A).

3. Flussfeldplatte (20) nach Anspruch 1, **dadurch gekennzeichnet, dass** die Teilplatten (21, 22) in einer Richtung parallel zur Oberfläche der Teilplatten (21, 22) gegeneinander verschoben aneinander anliegen.

4. Flussfeldplatte (20) nach einem der Ansprüche 1 bis 3, **dadurch gekennzeichnet, dass** die Teilplatten (21, 22) aus einem elektrisch leitenden Material, insbesondere aus Graphit bestehen.

5. Flussfeldplatte (20) nach einem der Ansprüche 1 bis 4, **dadurch gekennzeichnet, dass** die Öffnungen (23)in den Teilplatten (21, 22) gestanzt sind oder durch Wasserstrahl- oder Laserstrahlbearbeitung eingebrannt sind.

6. Flussfeldplatte (20) nach einem der Ansprüche 1 bis 5, **dadurch gekennzeichnet, dass** wenigstens ein Teil der Öffnungen (23) der Teilplatte als längliche Schlitze ausgebildet sind, vorzugsweise mit einem Längen- und Breitenverhältnis von mindestens 2:1 und/oder grösser und dass die Öffnungen vorzugsweise parallel zu den Seiten (26) einer rechteckig ausgebildeten Teilplatte (21, 22) verlaufen.

7. Flussfeldplatte (20) nach einem der Ansprüche 1 bis 6, **dadurch gekennzeichnet, dass** wenigstens ein Teil der Öffnungen (23) abgewinkelt, gebogen oder verjüngend ausgebildet sind.

8. Flussfeldplatte (20) nach Anspruch 6 und 7, **dadurch gekennzeichnet, dass** die Öffnungen (23) durch Stege (25) unterbrochen sind, derart, dass durch die Stege (25) Stufen für das Fluid im Flusskanal gebildet werden.

9. Flussfeldplatte (20) nach Anspruch 8, **dadurch gekennzeichnet, dass** die Stufen (25) derart ausgebildet sind, dass eine Durchwirbelung des Fluides bewirkbar ist.

10. Einteilige Flussfeldplatte (120), welche mit sich von einer Oberfläche zur andern Oberfläche erstreckenden Öffnungen (23) versehen ist, wobei Stege (125) die Öffnungen (123) voneinander trennen, **dadurch gekennzeichnet, dass** im Bereich der Stege (125) die Flussfeldplatte mit Rillen zum Übertritt des Fluides von einer Öffnung (123) in eine angrenzende Öffnung (123) versehen ist.

11. Flussfeldplatte (120) nach Anspruch 10, **dadurch gekennzeichnet, dass** die Rillen (126) bei der Plattenherstellung in die Flussfeldplatte eingeprägt sind oder nachträglich durch Schleifen, Fräsen, Lasern oder Wasserstrahlschneiden eingearbeitet sind.

12. Platte für eine Brennstoffzelle, insbesondere Flussfeldplatte (20) nach einem der Ansprüche 1 bis 11, **dadurch gekennzeichnet, dass** die Platte mit wenigstens einem vom Rand der Platte (20, 21, 22, 30, 40, 41, 50, 61, 62) seitlich abstehenden Vorsprung (27, 28, 31, 44, 45, 62, 63) oder eingerückten Absatz versehen sind.

13. Flussfeldplatte (20) nach einem der Ansprüche 1 bis 9, **dadurch gekennzeichnet, dass** die Teilplatten (21, 22) je mit wenigstens einem vom Rand der Teilplatte (21, 22) seitlich abstehenden Vorsprung (28) oder eingerückten Absatz versehen sind.

14. Brennstoffzelle (10) mit wenigstens einer Flussfeldplatte (20, 120) nach einem der Ansprüche 1 bis 13.

15. Brennstoffzelle (10), insbesondere nach Anspruch 14, aufgebaut aus wenigstens einer Platte (20, 21, 22, 30, 40, 41, 50, 61, 62), **dadurch gekennzeichnet, dass** wenigstens eine der Platten (20, 21, 22, 30, 40, 41, 50, 61, 62) wenigstens einen Vorsprung (27, 28, 31, 44, 45, 62, 63) aufweist, der seitlich aus einem durch die Platten (20, 21, 22, 30, 40, 41, 50, 61, 62) gebildeten Stapel hervorsteht.

16. Brennstoffzelle (10) nach Anspruch 15, **dadurch gekennzeichnet, dass** der wenigstens eine Vorsprung (27, 28, 31, 44, 45, 62, 63) an der oder den Platten (20, 21, 22, 30, 40, 41, 50, 61, 62) derart angeordnet ist, dass die gegenseitige Ausrichtung und/oder die Reihenfolge der Platten (20, 21, 22, 30, 40, 41, 50, 61, 62) mittels der Vorsprünge (27, 28, 31, 44, 45, 62, 63) feststellbar oder überprüfbar ist.

17. Brennstoffzelle (10) nach Anspruch 15 oder 16, **dadurch gekennzeichnet, dass** alle zur Bildung der Brennstoffzelle (10) notwendigen Platten (20, 21, 22, 30, 40, 41, 50, 61, 62) einen oder mehrere Vorsprünge (27, 28, 31, 44, 45, 62, 63) aufweisen.

18. Brennstoffzelle (10) nach Anspruch 15 oder 16, **dadurch gekennzeichnet, dass** alle zur Bildung der Brennstoffzelle notwendigen Platten ausser einer beliebigen Platte einen oder mehrere Vorsprünge (27, 28, 31, 44, 45, 62, 63) aufweisen.

19. Brennstoffzelle nach einem der Ansprüche 14 bis 18, **dadurch gekennzeichnet, dass** wenigstens eine elektrisch leitende Platte (21, 22, 44, 45) mit einem Vorsprung (28, 44, 45) versehen ist.

20. Brennstoffzellenstapel mit wenigstens zwei Brennstoffzellen (10) nach einem der Ansprüche 14 bis 18.

21. Brennstoffzellenstapel nach Anspruch 20, **dadurch gekennzeichnet, dass** die Brennstoffzellen (10) des Stapels identisch aufgebaut sind, insbesondere, dass die Vorsprünge (27, 28, 31, 44, 45, 62, 63) der Platten (20, 21, 22, 30, 40, 41, 50, 61, 62) der einzelnen Brennstoffzellen (10) identisch angeordnet sind.

22. Verfahren zum Herstellen einer Brennstoffzelle nach einem der Ansprüche 14 bis 19, wobei die Brennstoffzelle durch Aufeinanderstapeln von wenigstens zwei Platten (20, 21, 22, 30, 40, 41, 50, 61, 62) aufgebaut wird, **dadurch gekennzeichnet, dass** die Platten (20, 21, 22, 30, 40, 41, 50, 61, 62) mittels seitlich vorstehenden Vorsprüngen (27, 28, 31, 44, 45, 62, 63) gegenseitig ausgerichtet werden und/oder dass die richtige Reihenfolge derart aufeinander gestapelten Platten (20, 21, 22, 30, 40, 41, 50, 61, 62) anhand von seitlich vorstehenden Vorsprüngen (27, 28, 31, 44, 45, 62, 63) überprüft wird.

23. Verfahren zum Kontrollieren des Betriebs eines Brennstoffzellenstapels nach einem der Ansprüche 20 oder 21, **dadurch gekennzeichnet, dass** das elektrische Potential wenigstens einer elektrisch leitenden Platte (40, 41) insbesondere an einem seitlich vorstehenden Vorsprung (44, 45) abgegriffen wird.

24. Verfahren zum Reparieren eines Brennstoffzellenstapels nach einem der Ansprüche 20 oder 21, **dadurch gekennzeichnet, dass** eine defekte Brennstoffzelle (40) im Stapel durch elektrisches Verbinden von zur defekten Brennstoffzelle benachbarten Brennstoffzellen, insbesondere durch Verbinden von seitlich vorstehenden Vorsprüngen (44, 45) an Platten (40, 41) der benachbarten Brennstoffzellen, elektrisch überbrückt wird.
